# EUROPÄISCHE PATENTANMELDUNG

(11) **EP 2 034 265 A2**
(43) Veröffentlichungstag der Anmeldung: **11.03.2009**
(21) Anmeldenummer: 08014889.3
(22) Anmeldetag: 22.08.2008
(51) Int. Cl.: F28D 7/00, F28D 7/02, F28D 7/10

(54) **Wärmetauscher und Verfahren zum Herstellen und Betreiben**

(30) Priorität: 05.09.2007 DE 102007042232
(71) Anmelder: Robert Bosch GmbH, 70442 Stuttgart (DE)
(72) Erfinder: Schäfer, Albrecht, 70771 Leinfelden-Echterdingen (DE); Laffert, Günter, 73249 Wernau (DE); Schmuker, Franz, 73117 Wangen (DE); Böbel, Christian, 73724 Notzingen (DE)

(57) **Zusammenfassung**

Die Erfindung betrifft einen Wärmetauscher zur integrierten Heizwassererwärmung und Trinkwarmwasserbereitung.

Aufgabe der vorliegenden Erfindung ist es, einen Brennwert-Wärmetauscher mit möglichst geringem konstruktiven Zusatzaufwand zu schaffen, wobei auf teure Komponenten verzichtet und ein Ausfallrisiko minimiert wird.

Der konstruktive Aufbau des Wärmetauschers ist gekennzeichnet durch einen auf der separaten Umhüllung (2) angeordneten, separaten zweiten wärmeaufnehmenden Strömungskanal (7) für ein zweites wärmeaufnehmendes Medium. Dieser zweite wärmeaufnehmende Strömungskanal (7) ist dem ersten wärmeaufnehmenden Strömungskanal (5) zugeordnet und über die separate Umhüllung (2) wärmeleitend mit diesem verbunden. Seiner Form nach weist der zweite wärmeaufnehmende Strömungskanal (7) zweckmäßigerweise einen mäanderförmigen Verlauf auf.

## Beschreibung

Die Erfindung betrifft einen Wärmetauscher nach dem Oberbegriff des Patentanspruches 1.

Ein Wärmetauscher dieser Art für ein Heizgerät ist aus der DE 103 06 699 A1 bekannt. Dabei ist ein im Wesentlichen zylindrischer Grundkörper, der gießtechnisch hergestellt ist, mit einer wärmeübertragenden Wand ausgeführt. Der Grundkörper besitzt im Inneren einen Heizgaszug für ein als wärmeabgebendes Medium dienendes Heizgas. Stirnseitig über dem Heizgaszug ist ein Brenner angebaut. Die aus der Verbrennung von Brenngas oder Heizöl hervorgehenden Heizgase durchströmen den Heizgaszug vom brennernahen heißen oberen Bereich zum brennerfernen kühlen unteren Bereich. An der Außenseite der wärmeübertragenden Wand weist der Grundkörper einen wendelförmigen Strömungskanal für ein als wärmeaufnehmendes Medium dienendes Heizwasser auf. Der Heizwasserkanal als wärmeaufnehmender Strömungskanal ist dabei durch einen in die Mantelfläche der wärmeübertragenden Wand wendelförmig eingeformten Graben gebildet, der nach außen hin mit einer die wärmeübertragende Wand umschließenden separaten Umhüllung umgeben ist, so dass sich der geschlossene, wendelförmige Heizwasserkanal an der äußeren Mantelfläche des Grundkörpers ergibt. Der Heizwasserkanal ist dabei über seine wendelförmige Erstreckung mit lokal unterschiedlichen Strömungsquerschnitten derart ausgeführt, dass die Strömungsgeschwindigkeit des innerhalb des wärmeaufnehmenden Strömungskanals strömenden Mediums an die Wärmebelastung des entsprechenden Bereiches der wärmeübertragenden Wand anpassbar ist.

Das im wärmeaufnehmenden Strömungskanal fließende Heizwasser wird von einer Pumpe umgewälzt und externen Wärmesenken zugeführt. Hier dient das Heizwasser zum Beispiel der Raumheizung oder Trinkwarmwasserbereitung.

Im Falle der Trinkwarmwasserbereitung erkennt eine Heizgeräteregelung einen entsprechenden Trinkwasserwärmebedarf und betätigt ein Umschaltventil, das das im oben beschriebenen primären Wärmetauscher erwärmte Heizwasser über einen separaten Trinkwasserwärmetauscher, auch Sekundärwärmetauscher genannt, leitet. Das Heizwasser kühlt im Sekundärwärmetauscher ab und strömt zurück in die wendelförmigen Strömungskanäle des primären Wärmetauschers, während ein Trinkwasserstrom im Sekundärwärmetauscher erwärmt und dem Verbraucher zugeführt wird. Die Trinkwarmwasserbereitung ist also auf einen von einer Pumpe umgewälzten und bezüglich Temperatur und Volumenstrom geregelten Heizwasserstrom, ein Umschaltventil und einen Sekundärwärmetauscher angewiesen. Der Sekundärwärmetauscher ist zumeist als Plattenwärmetauscher ausgeführt.

Aufgabe der vorliegenden Erfindung ist es, einen Brennwert-Wärmetauscher für die kombinierte Heizwasser-/Trinkwassererwärmung mit möglichst geringem konstruktiven Zusatzaufwand zu schaffen, wobei auf teure Komponenten verzichtet und ein Ausfallrisiko minimiert wird.

Erfindungsgemäß wird dies mit den Merkmalen des Patentanspruches 1 gelöst. Vorteilhafte Weiterbildungen sind den Unteransprüchen zu entnehmen.

Der konstruktive Aufbau des Wärmetauschers ist gekennzeichnet durch einen auf der separaten Umhüllung angeordneten, separaten zweiten wärmeaufnehmenden Strömungskanal für ein zweites wärmeaufnehmendes Medium. Dieser zweite wärmeaufnehmende Strömungskanal ist dem ersten wärmeaufnehmenden Strömungskanal zugeordnet und über die separate Umhüllung wärmeleitend mit diesem verbunden. Seiner Form nach weist der zweite wärmeaufnehmende Strömungskanal zweckmäßigerweise einen mäanderförmigen Verlauf auf. In einer ersten Ausführungsform folgt der zweite wärmeaufnehmende Strömungskanal im Wesentlichen dem wendelförmigen Verlauf des ersten wärmeaufnehmenden Strömungskanals.

In einer zweiten Ausführungsform verläuft der zweite wärmeaufnehmende Strömungskanal in Strömungsrichtung zunächst über einen ersten, brennerfernen Endbereich des ersten wärmeaufnehmenden Strömungskanals, dann über dessen anderen, brennernahen Endbereich, und dann über dessen mittleren Bereich. Aus Gründen der Effektivität wird ein Wärmetausch nach dem Gegenstromprinzip angestrebt, und zwar sowohl zwischen wärmeabgebendem Heizgas und erstem wärmeaufnehmenden Medium als auch zwischen erstem und zweitem wärmeaufnehmenden Medium. Demzufolge wird das erste wärmeaufnehmende Medium im brennerfernen Wärmetauscherbereich in seinen Strömungskanal eintreten, um die Heizgase mit der größtmöglichen Temperaturdifferenz unter ihre Taupunkttemperatur zu kühlen. Damit die Brennwertnutzung auch bei Erwärmung des zweiten Mediums gewährleistet ist, kommt es aber entscheidend darauf an, dass der brennerferne Wärmetauscherbereich möglichst stark abgekühlt wird. Dazu wird vorgeschlagen, mit dem noch kalten zweiten wärmeaufnehmenden Medium zunächst das brennerferne erste wärmeaufnehmende Medium und damit ebenfalls das brennerferne Heizgas zu kühlen. Von dort fließt das zweite wärmeaufnehmende Medium auf direktem Weg zum brennernahen Bereich, um von dort dann im Gegenstrom zum ersten wärmeaufnehmenden Medium weiterzuströmen.

Entlang seiner Längserstreckung kann der zweite wärmeaufnehmende Strömungskanal lokal unterschiedliche Strömungsquerschnitte aufweisen, sodass die Strömungsgeschwindigkeit des innerhalb des zweiten wärmeaufnehmenden Strömungskanals strömenden zweiten wärmeaufnehmenden Mediums an die Wärmebelastung und/oder gewünschte Kühlung des zugeordneten Bereiches des ersten wärmeaufnehmenden Strömungskanals und/oder der wärmeübertragenden Wand anpassbar ist. Mäanderförmig angeordnete Leitelemente zwischen der separaten Umhüllung und der Außenwand des zweiten Strömungskanals bilden in einer Ausführungsform die Wände, die den zweiten Strömungskanal seitlich begrenzen, wobei die Leitelemente durch Stützelemente in ihrer Lage fixiert sind. In einer anderen zweckmäßigen Ausführungsform sind die separate Umhüllung und die Außenwand des zweiten Strömungskanals zu einem Bauteil zusammengefasst. So kann dieses Bauteil zum Beispiel aus zwei durch mäanderförmige Schweißnähte lokal miteinander verschweißten Blechen bestehen, zwischen denen das zweite wärmeaufnehmende Medium strömt. Die Schweißnähte bilden die seitlich begrenzenden Kanalwände. Weiter kann der zweite wärmeaufnehmende Strömungskanal aus einem Metallrohr bestehen, das auf der separaten Umhüllung aufgelötet oder aufgeschweißt ist. Schließlich wird eine Ausführungsform vorgeschlagen, bei der der zweite Strömungskanal aus einem gegossenen Metallteil oder einem spritzgegossenen Kunststoffteil gebildet ist, wobei Mediumanschlussstücke für Einlauf und Auslauf des zweiten wärmeaufnehmenden Mediums an das Metallteil oder Kunststoffteil angeformt sind. Das Kunststoffteil umfasst eingegossene oder separate Metallteile, die es gegen die von einem Wasserdruck aufgeprägten Kräfte verstärken. Die Mediumanschlüssstücke sind an den beiden Endbereichen des zweiten wärmeaufnehmenden Strömungskanals in etwa radial, tangential oder axial zum Grundkörper angeordnet. Bei einer Weiterentwicklung des erfinderischen Gedankens kann auf der Außenwand des zweiten wärmeaufnehmenden Strömungskanals ein separater dritter wärmeaufnehmender Strömungskanal für ein drittes wärmeaufnehmendes Medium angeordnet sein, der mit dem zweiten wärmeaufnehmenden Strömungskanal wärmeleitend verbunden ist.

Bei der Anwendung des erfindungsgemäßen Wärmetauschers in der Praxis kann beispielsweise das erste wärmeaufnehmende Medium Heizwasser und das zweite wärmeaufnehmende Medium Trinkwasser sein. Zur Intensivierung des Wärmeübergangs ist es im Betrieb zweckmäßig, bei Erwärmung des zweiten wärmeaufnehmenden Mediums (Trinkwasser) das erste wärmeaufnehmende Medium (Heizwasser) umzuwälzen.

Die Herstellung eines erfindungsgemäßen Wärmetauschers, wie er vorstehend in einer zweckmäßigen Ausführungsform aus zwei lokal miteinander verschweißten Blechen beschrieben ist, geschieht in der Art, dass die verschweißten planen Bleche auf den Grundkörper dicht aufrolliert und der freie Zwischenraum zwischen den Blechen mit Druck beaufschlagt wird, sodass sich zwischen den Schweißnähten der zweite wärmeaufnehmende Strömungskanal aufweitet. Die zuvor lokal eingebrachten mäanderförmigen Schweißnähte bilden die seitlichen Begrenzungen des zweiten wärmeaufnehmenden Strömungskanals. Durch Anordnung der Schweißnähte können Lage, Verlauf und lokal variierende Querschnitte des zweiten Strömungskanals vorgegeben werden. Es kann sinnvoll sein, während der Aufweitung des zweiten Strömungskanals gleichzeitig auch den ersten Strömungskanal mit Druck zu beaufschlagen, um eine Auswölbung des zweiten wärmeaufnehmenden Strömungskanals in den ersten Strömungskanal hinein zu vermeiden.

Die Erwärmung von Heizwasser geschieht wie aus der DE 103 06 699 A1 bekannt unter Umwälzung mittels einer Umwälzpumpe. Der Wärmestrom kommt aus dem wärmeabgebenden Medium des Heizgaszuges und fließt durch die wärmeübertragende Wand und die den ersten wärmeaufnehmenden Strömungskanal seitlich begrenzende wendelförmig umlaufende Rippe in das Heizwasser.

Bei einer Anforderung von Trinkwarmwasser wird der zweite wärmeaufnehmende Strömungskanal von Trinkwasser durchströmt, während das Heizwasser im ersten Strömungskanal weiter umgewälzt wird. Der Wärmestrom fließt nun - aus dem wärmeabgebenden Medium des Heizgaszuges, der wärmeübertragenden Wand und der wendelförmig umlaufenden Rippe kommend - durch das Heizwasser in den zweiten wärmeaufnehmenden Strömungskanal und in das Trinkwasser.

Mit dieser Erfindung wird ein Wärmetauscher geschaffen, der durch die Integration eines zweiten wärmeaufnehmenden Strömungskanals auf einem ersten wärmeaufnehmenden Strömungskanal sowohl die Heizwassererwärmung als auch die Trinkwarmwasserbereitung ermöglicht und dabei auf einen separaten Sekundärwärmetauscher verzichtet. Das Trinkwasser wird während der Trinkwarmwasserbereitung durch den Versorgungsdruck im Leitungsnetz gefördert. Das Risiko eines sich zusetzenden Plattenwärmetauschers wird vermieden. Der ganze Aufbau ist platzsparender, kompakter und kostengünstiger.

Die Zeichnung stellt in drei Figuren fünf Ausführungsbeispiele der Erfindung dar. Sie zeigt den schematischen Aufbau des Grundkörpers mit erstem und zweitem wärmeaufnehmenden Strömungskanal eines erfindungsgemäßen Wärmetauschers. Der zentral liegende Heizgaszug als wärmeabgebender Strömungskanal ist erkennbar, aber nicht im Detail dargestellt.

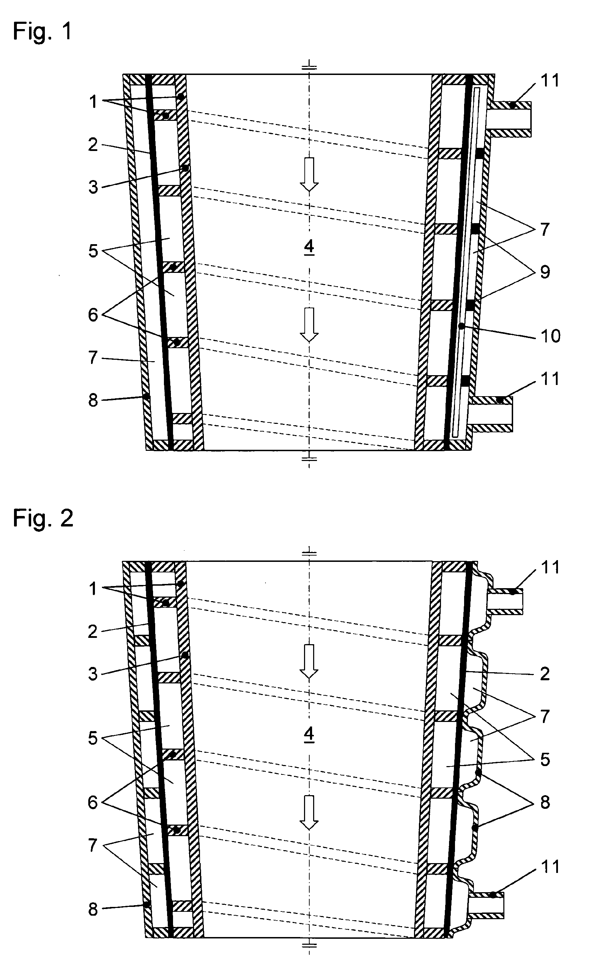

Gemäß Figur 1 umfasst der Wärmetauscher einen Grundkörper 1 und eine separate Umhüllung 2. Der Grundkörper 1 wird durch die wärmeübertragende Wand 3 in einen wärmeabgebenden Strömungskanal 4 für ein wärmeabgebendes Medium (Heizgas, Strömungsrichtung mit Pfeil angedeutet) und in einen ersten wärmeaufnehmenden Strömungskanal 5 für ein erstes wärmeaufnehmendes Medium (Heizwasser) geteilt. Die den ersten wärmeaufnehmenden Strömungskanal 5 seitlich begrenzende wendelförmig umlaufende Rippe 6 gibt dem Strömungskanal 5 seinen charakteristischen wendelförmigen Verlauf entlang der wärmeübertragenden Wand 3, der durch Strichlinien angedeutet ist. Auf der separaten Umhüllung 2 ist ein separater zweiter wärmeaufnehmender Strömungskanal 7 für ein zweites wärmeaufnehmendes Medium angeordnet. In der linken Bildhälfte von Figur 1 ist dieser zweite wärmeaufnehmende Strömungskanal 7 in Form eines hohlzylindrischen, von einer Außenwand 8 begrenzten Spaltes dargestellt. In der Darstellung der rechten Bildhälfte von Figur 1 wird dieser Strömungskanal 7 von wendelförmig angeordneten Leitelementen 9, fixiert von Stützelementen 10, begrenzt und gebildet. Ferner sind Mediumanschlussstücke 11 für den Einlauf und Auslauf des zweiten wärmeaufnehmenden Mediums zu erkennen.

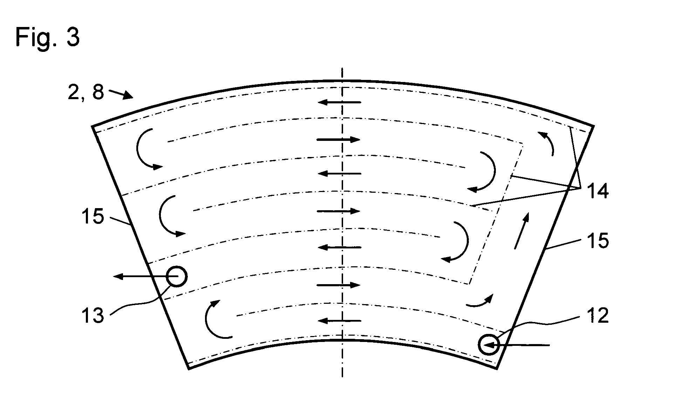

In der linken Bildhälfte von Figur 2 ist der zweite wärmeaufnehmende Strömungskanal 7 als einteilig gegossenes Metallteil oder spritzgegossenes Kunststoffteil dargestellt, das auf die separate Umhüllung 2 aufgesetzt wird. In der rechten Bildhälfte von Figur 2 ist der Aufbau eines aus zwei Blechen lokal miteinander verschweißten, aus separater Umhüllung 2 und Außenwand 8 zu einer baulichen Einheit zusammengefassten Bauteils zu sehen. Dieses Bauteil wurde unter Druckbeaufschlagung zu seiner dargestellten Form aufgeweitet. Figur 3 zeigt eine mögliche Abwicklung des aus separater Umhüllung 2 und Außenwand 8 zusammengefassten Bauteils. Mit Pfeilen angedeutet ist der mäanderförmige Strömungspfad des zweiten wärmeaufnehmenden Mediums vom Eintrittsquerschnitt 12 bis zum Austrittsquerschnitt 13. Es ist zu erkennen, dass das noch kalte zweite wärmeaufnehmende Medium unten in den aus Gründen der Brennwertnutzung besonders zu kühlenden Wärmetauscherbereich zugeführt, dann nach oben in Brennernähe geleitet wird und von dort im Gegenstrom von oben nach unten fließt. Dazwischen ist strichpunktiert angedeutet die Lage der Schweißnähte 14, mit denen die separate Umhüllung 2 und die Außenwand 8 des zweiten wärmeaufnehmenden Strömungskanals 7 verbunden sind. Nach dem Aufrollieren dieses Bauteils auf dem Grundkörper 1 wird es an der Kante 15 zugeschweißt und verschlossen.

## Patentansprüche

1. Wärmetauscher, umfassend einen Grundkörper (1), in dem ein wärmeabgebender Strömungskanal (4) für ein wärmeabgebendes Medium und ein erster wärmeaufnehmender Strömungskanal (5) für ein erstes wärmeaufnehmendes Medium ausgebildet sind, wobei über eine am Grundkörper (1) ausgebildete wärmeübertragende Wand (3) eine Wärmeübertragung vom wärmeabgebenden Medium auf das erste wärmeaufnehmende Medium stattfindet, und wobei der erste wärmeaufnehmende Strömungskanal (5) wendelförmig entlang der wärmeübertragenden Wand (3) geführt, seitlich durch eine wendelförmig umlaufende Rippe (6) und nach außen durch eine separate Umhüllung (2) begrenzt ist,
**dadurch gekennzeichnet, dass** auf der separaten Umhüllung (2) ein separater zweiter wärmeaufnehmender Strömungskanal (7) für ein zweites wärmeaufnehmendes Medium angeordnet ist, der dem ersten wärmeaufnehmenden Strömungskanal (5) zugeordnet und wärmeleitend mit diesem verbunden ist.

2. Wärmetauscher nach Anspruch 1,
**dadurch gekennzeichnet, dass** der Verlauf des zweiten wärmeaufnehmenden Strömungskanals (7) die Form eines Mäanders aufweist.

3. Wärmetauscher nach Anspruch 1 oder 2,
**dadurch gekennzeichnet, dass** der zweite wärmeaufnehmende Strömungskanal (7) im Wesentlichen dem wendelförmigen Verlauf des ersten wärmeaufnehmenden Strömungskanals (5) folgt.

4. Wärmetauscher nach Anspruch 1 oder 2,
**dadurch gekennzeichnet, dass** der zweite wärmeaufnehmende Strömungskanal (7) in seiner Strömungsrichtung zunächst über einen ersten Endbereich des ersten wärmeaufnehmenden Strömungskanals (5), dann über dessen anderen Endbereich, und dann über dessen mittleren Bereich verläuft.

5. Wärmetauscher nach einem der Ansprüche 1 bis 4,
**dadurch gekennzeichnet, dass** der zweite wärmeaufnehmende Strömungskanal (7) entlang seiner Längserstreckung lokal unterschiedliche Strömungsquerschnitte derart aufweist, dass die Strömungsgeschwindigkeit des innerhalb des zweiten wärmeaufnehmenden Strömungskanals (7) strömenden Mediums an die Wärmebelastung und/oder gewünschte Kühlung des entsprechenden Bereiches des ersten wärmeaufnehmenden Strömungskanals (5) und/oder der wärmeübertragenden Wand (3) anpassbar ist.

6. Wärmetauscher nach einem der Ansprüche 1 bis 5,
**dadurch gekennzeichnet, dass** der zweite wärmeaufnehmende Strömungskanal (7) seitlich begrenzende Wände aufweist, die durch im Wesentlichen mäanderförmig angeordnete Leitelemente (9) zwischen der separaten Umhüllung (2) und einer Außenwand (8) des zweiten wärmeaufnehmenden Strömungskanals (7) gebildet sind, wobei die Leitelemente (9) durch Stützelemente (10) in ihrer Lage fixiert sind.

7. Wärmetauscher nach einem der Ansprüche 1 bis 6,
**dadurch gekennzeichnet, dass** die separate Umhüllung (2) und die Außenwand (8) des zweiten wärmeaufnehmenden Strömungskanals (7) zu einem Bauteil zusammengefasst sind.

8. Wärmetauscher nach einem Anspruch 7,
**dadurch gekennzeichnet, dass** das aus separater Umhüllung (2) und Außenwand (8) gebildete Bauteil aus zwei durch mäanderförmige Schweißnähte (14) lokal miteinander verbundenen Blechen besteht.

9. Wärmetauscher nach einem der Ansprüche 1 bis 5,
**dadurch gekennzeichnet, dass** der zweite wärmeaufnehmende Strömungskanal (7) aus einem Metallrohr besteht, das auf der separaten Umhüllung (2) aufgelötet oder aufgeschweißt ist.

10. Wärmetauscher nach einem der Ansprüche 1 bis 7,
**dadurch gekennzeichnet, dass** der zweite wärmeaufnehmende Strömungskanal (7) aus einem gegossenen Metallteil oder einem spritzgegossenen Kunststoffteil gebildet ist, wobei Mediumanschlussstücke (11) für Einlauf und Auslauf des zweiten wärmeaufnehmenden Mediums an das Metallteil oder Kunststoffteil angeformt sind.

11. Wärmetauscher nach Anspruch 10,
**dadurch gekennzeichnet, dass** das Kunststoffteil eingegossene oder separate Metallteile zur Verstärkung gegen die von einem Wasserdruck aufgeprägten Kräfte umfasst.

12. Wärmetauscher nach einem der Ansprüche 1 bis 11,
**dadurch gekennzeichnet, dass** die Mediumanschlüssstücke (11) für Einlauf und Auslauf des zweiten wärmeaufnehmenden Mediums an den beiden Endbereichen des zweiten wärmeaufnehmenden Strömungskanals (7) in etwa radial, tangential oder axial zum Grundkörper (1) angeordnet sind.

13. Wärmetauscher nach einem der Ansprüche 1 bis 12,
**dadurch gekennzeichnet, dass** das erste wärmeaufnehmende Medium Heizwasser und das zweite wärmeaufnehmende Medium Trinkwasser ist.

14. Wärmetauscher nach einem der Ansprüche 1 bis 13,
**dadurch gekennzeichnet, dass** auf der Außenwand (8) des zweiten wärmeaufnehmenden Strömungskanals (7) ein separater dritter wärmeaufnehmender Strömungskanal für ein drittes wärmeaufnehmendes Medium angeordnet ist, der mit dem zweiten wärmeaufnehmenden Strömungskanal (7) wärmeleitend verbunden ist.

15. Verfahren zum Betreiben eines Wärmetauschers nach Ansprüchen 1 bis 14,
**dadurch gekennzeichnet, dass** bei Durchströmung des zweiten wärmeaufnehmenden Strömungskanals (7) mit dem zweiten wärmeaufnehmendem Medium das erste wärmeaufnehmende Medium umgewälzt wird.

16. Verfahren zum Herstellen eines Wärmetauschers nach Anspruch 8,
**dadurch gekennzeichnet, dass** der zweite wärmeaufnehmende Strömungskanal (7) durch Druckbeaufschlagung aufgeweitet wird und die lokal eingebrachten Schweißnähte (14) die seitlichen Begrenzungen des zweiten wärmeaufnehmenden Strömungskanals (7) bilden.
